# EUROPEAN PATENT SPECIFICATION

(11) **EP 3 962 682 B1**
(45) Date of publication and mention of the grant of the patent: **09.07.2025**
(21) Application number: 20735022.4
(22) Date of filing: 04.05.2020
(51) Int. Cl.: B22F 3/105, B33Y 10/00, B33Y 40/00, B22F 3/24, B22F 10/00, B22F 10/28, B22F 10/40, B22F 10/47, B22F 10/60, B22F 10/62, B33Y 40/20

(54) **METHOD FOR ADDITIVE MANUFACTURING OF THREE-DIMENSIONAL OBJECTS**
VERFAHREN ZUR GENERATIVEN FERTIGUNG VON DREIDIMENSIONALEN OBJEKTEN
PROCÉDÉ DE FABRICATION ADDITIVE D'OBJETS TRIDIMENSIONNELS

(30) Priority: 05.05.2019 PL 42983219
(43) Date of publication of application: 09.03.2022
(73) Proprietor: AMAZEMET SPOLKA Z ORGANICZONA ODPOWIEDZIALNOSCIA, 00-867 Warszawa (PL)
(72) Inventor: ZRODOWSKI, Lukasz, 80-462 Gdansk (PL)
(74) Representative: Bury & Bury
(86) International application number: PCT/IB2020/054217
(87) International publication number: WO 2020/225711

(56) References cited:
- WO-A1-2017/143005
- WO-A1-2017/143013
- WO-A1-2018/013178
- US-A1- 2018 163 311
- US-A1- 2019 039 137
- TAN K L ET AL: "Surface modification of additive manufactured components by ultrasonic cavitation abrasive finishing", WEAR, vol. 378, 17 April 2012 (2012-04-17), pages 90 - 95, XP029955214, ISSN: 0043-1648, DOI: 10.1016/J.WEAR.2017.02.030
- CHRISTOPHER S. LEFKY ET AL: "Dissolvable Supports in Powder Bed Fusion-Printed Stainless Steel", 3D PRINTING AND ADDITIVE MANUFACTURING, vol. 4, no. 1, 1 March 2017 (2017-03-01), DE, pages 3 - 11, XP055529056, ISSN: 2329-7662, DOI: 10.1089/3dp.2016.0043
- GRZEGORZ PYKA ET AL: "Surface Modification of Ti6Al4V Open Porous Structures Produced by Additive Manufacturing", ADVANCED ENGINEERING MATERIALS., vol. 14, no. 6, 17 April 2012 (2012-04-17), DE, pages 363 - 370, XP055717809, ISSN: 1438-1656, DOI: 10.1002/adem.201100344

## Description

The invention concerns a method for additive manufacturing of three-dimensional objects, in which support removal is realized through chemical or electrochemical treatment.

3D printing methods, such as selective laser melting (SLM), electron beam melting (EBM), enable the manufacturing of complex metal alloy objects, impossible to obtain or not economically feasible to produce using other methods. These methods are based on fusing powder layers with a laser or electron beam. The process is realized through spreading a thin layer of the powder and guiding a laser beam on its surface, according to prior input data on the subsequent layers of the cross-sectional area of the manufactured object. Selection of laser beam parameters allows for the melting or sintering of the material in specific areas of the powder layers. The operation is repeated for subsequent powder layers. Typically, metal powders are used, such as technical grade titanium, TiCP alloy, Inconel 718 and 625 nickel alloys, steel - including austenitic and maraging steels, as well as other metallic alloys and ceramic-metal composites.

Due to the specificity of these manufacturing methods, it is impossible to obtain certain geometric shapes without support structures. The purpose of the support structures is to maintain stiffness, preventing the manufactured object - model from undergoing deformation during the manufacturing process and enabling heat dissipation from the subsequent layers. After the 3D printing process is finished, the support structures have to be removed. Support removal is a time-consuming and labor-intensive process - for this reason, automation methods are intensively developed for the procedure.

Currently, the simplest and most frequently used methods for the removal of support structures is machining and electric discharge machining. A relatively new method is the removal of support structures through chemical or electrochemical treatment. The treatment is based on subjecting the manufactured model, along with the support structures, to etchants. Typically, mixtures of oxidizing acids are used (for objects produced from titanium or steel) or concentrated alkalis (for objects produced from aluminum alloys), in such a way that the reaction products will be soluble in the solution used. The support material may be identical to the model material - this way, it is subject to dissolution along with the supports, undergoing a reduction in size, or the supports may be manufactured from a material with a lower chemical resistance.

Typically, support structures can be divided into point, line, and surface, made into a lattice shape. To facilitate the separation of a support structure from the manufactured object, the support structures are typically finished with a row of teeth, manufactured in the form of trapezes or triangles. This weakens the support at the connection point with the object and enables its easier separation. Point and linear structures are simple to chemically remove due to the easy etchant access. However, massive structures are found to be the best in regards to the support function. Such structures are, nonetheless, the main problem during etching.

According to paper Dissolvable metal supports for printed metal parts, Lefky, 2016, the LENS method was used, in which the support material was carbon steel and the manufactured object was made of stainless steel. The solution was described in the WO2017143005 patent application. The method is impossible to use in both SLM and EBM due to the lack of possibility to use more than one material during the manufacturing process.

A similar concept was presented by the same author for the selective laser melting method (Dissolvable Supports in Powder Bed Fusion-Printed Stainless Steel, Lefky, 2017). In this case, carburization of the whole model along with the support structures was used. The carburized layer has been found to exhibit a lower corrosion resistance and was subject to etching with the chosen reagent. The carburization depth was approximately 200 micrometers, which has allowed for the support structures to be carburized throughout their whole cross-section area. The significant changes of the chemical composition of the support structures along their cross-sectional area have allowed for their complete dissolution with a controlled reduction in the dimensions of the model itself (the thickness of the carburized layer). This solution has been described in detail in the WO2018013178 and US2011256416 patent publications. The main purpose of these inventions is the surface modification of the material through chemical or thermochemical treatment and subsequent chemical removal of the layer with the reduced chemical resistance. This method requires time-consuming heat treatment; moreover, it is only possible to be applied to materials, for which the processing temperature (e.g. maraging steel hardening process) is lower than the carburization temperature.

The solution described in WO2018013178 is also limited by the diffusion of the solution or of the sensitizing gas inside the support structures, as well as by the diffusion of alloy components inside the material itself. The first limitation stems from the difficulty in designing uniform changes in the chemical composition of the entire model, particularly inside the support structures. The thermochemical treatment is limited by diffusion within the porous structures; therefore, it is more difficult to obtain a homogeneous layer with a changed chemical composition. The second limitation is the change profile in the chemical composition of the model in question along its depth. The change in the chemical composition along the layer depth is continuous, therefore even after the model is produced, the surface layer will have a different chemical composition than the base material. As the purpose of the saturation itself is to decrease the chemical resistance of the model, the object itself has decreased chemical resistance and is more susceptible to corrosion.

Alternatively, an etching solution is used to etch both the model and the support structures. Due to the significantly lower thickness of the support structures, they are subject to etching at a rate much higher than the model itself (Untersuchungen zum automatisierten Entstützen SLM-gefertigter Bauteile, Schmithüsen, 2017). In the case of this solution, the problem is the lack of homogeneity in the etching of the support structures in larger models. Support structures at the edges are subject to more intensive etching than those closer to the center of the model. This is due to the non-uniform rate of removal of the corrosion products and the access of the etching medium. Additionally, due to the lengthened support etching time, thinner parts of the manufactured object are damaged and the edges are rounded. As a result, while traditional supports are used, model parts below 1.5 mm might be subject to complete dissolution through etching. During the reactions of typical etched material-etching reagent systems, such as technical grade titanium with a mixture of nitric acid and hydrofluoric acid, silumin AlSi12 with a solution of sodium hydroxide, Inconel 718 with hydrochloric acid and iron (III) chloride, soluble metal salts and hydrogen are the main products of the reactions. Intensive release of hydrogen vapor pushes the solution out of the support structures, causing their non-uniform removal. Moreover, the formation of solid products, such as silicon deposits during the etching of silumin, additionally contributes to process instability. Modifications of this approach have been described in a number of patent applications.

WO2018073259 describes a method for the formation of dendritic support structures in the selective laser melting method, which undergo etching at a higher rate. A part of the support structures in direct contact with the model is divided into diverging branches. Thanks to this solution, the support structure crown has a higher active surface for the etching to take place and is removed at a higher rate than support structures in other solutions. A disadvantage to support structures according to this solution is their low stiffness and susceptibility to buckling in comparison to truss support structures.

US2015197862 describes a method of additive manufacturing, in which the target object is enlarged by an allowance for chemical etching. What is more, the generated support structures have a higher porosity than the final product. The areas at which the support structures and the object itself come into contact are particularly susceptible to etching. Additionally, an automatic system for the removal of the objects after the support structures have been removed has been described. The solution however only describes typical truss support structures.

WO2017143013 describes parameter selection in the selective laser melting method in such a way that the support structures have lower chemical resistance than the material of the object produced. Changes in the support structure parameters cause chemically unstable phases to be produced or the porosity to increase.

Despite a number of significant advancements in the chemical removal of support structures, these methods have not found a wider application due to their low repeatability and non-uniform support structure etching.

The present invention provides method claims 1 and 9 to solve the problem illustrated above, dependent claims disclosing preferred embodiments.

Support structures according to the invention are removed in reactions with the etching solution. A condition for uniform etching of the support structures in the entire object penetration of these structures by the etching solution. Taking into account the economically preferable solution, i.e. etching the support structures away while object is still on the working plate, there is a need provide ways of support structure penetration by the etching solution. The flow in the direction perpendicular to the powder deposition plane will always be limited by the working plate on one side and the manufactured object on the other side. Therefore, an important condition for the permeability of the support structure in relation to the etching solution is the permeability in the direction perpendicular to the powder deposition plane.

Support structure walls according to the invention are no thicker than 1 mm. The rate of support structure etching directly depends on their wall thickness and not necessarily on the dimensions of the structure itself. For example, a cylindrical support structure with a diameter of 1 mm and wall thickness of 100 µm undergoes etching at the same rate as a solid cylinder structure with a diameter of 200 µm. At the same time, the cylindrical structure maintains a much higher stiffness.

The etching solution according to the invention contains at least one component which causes a passive layer to form on the processed material. Similar to chemical polishing, the material subjected to chemical removal of the support structures may be etched in two distinct ways. In the first, the material surface undergoes pitting, in the second - surface irregularities are leveled. The presence of the component, which allows for the passive layer to be rebuilt is necessary for the material to be dissolved evenly.

The etching solution according to the invention is excited with ultrasounds with intensity higher than the cavitation threshold in given material. Cavitation within the solution is necessary for the solution to penetrate the support structures well and helps to successfully remove gases produced during the etching.

The ultrasound excitation itself changes the characteristics of the chemical double layer (an ion layer on the surface of a solid submerged in a solution) and is beneficial as it increases the rate of numerous chemical reactions. On the other hand, below the cavitation threshold, ultrasounds have a negligible influence on the penetration of support structures by the etching solution.

According to the invention, the etching solution is composed of at least two components, with the absence of one of them preventing the reaction with the support structure material from taking place and the support structures are soaked in a solution containing one of the etching solution components, and then the object is moved to a container containing the second component of the etching liquid. Chemical reaction with the support structure material takes place when the solution components are mixed, in this case, it takes place inside the support structures during the diffusion of the second component to their interior. This allows for a temporary separation of two etching solution components in such a way that dissolution of the manufactured object is reduced. Due to a large surface area of the support structures and short distances between them, the support structures are characterized by a much higher propensity for liquid retention than the object itself. In the first stage, the object along with the support structures is soaked in a solution containing the first component. Due to the lack of a second component of the etching solution, the material does not undergo etching. Subsequently, the object along with the support structures is moved to a container containing the second component of the solution. During the diffusion of the second component of the solution through the inside of the support structures, mixing with the first solution component takes place and a reaction starts with the support structure material. Due to the small amount of the first component in the manufactured object, the chemical reaction and material etching does not take place.

Advantageously, the support structures are soaked in an aqueous solution containing metal fluorides, chlorides, or bromides, and then transferred to a container with the oxidizing acid.

Advantageously, the support structures are soaked in an aqueous solution containing metal fluorides, chlorides, or bromides, and then the solute is evaporated and the support structures are transferred to a container with the oxidizing acid.

Advantageously, the support structures are soaked in an aqueous solution containing metal fluorides, chlorides, or bromides, and then rinsed in a cleaning solution, then transferred to a container with the oxidizing acid.

A number of metallic materials undergo etching as a result of simultaneous reactions with a strong oxidizing acid and halide ions. The elimination of one of the components causes the material to stop being susceptible to dissolution in an economically feasible length of time. This effect is advantageously used according to the invention for selective etching of the support structures. The support structures are soaked in a solution containing dissolved metal halides. Subsequently, the solvent is evaporated, leaving a layer of salt on the surface of the manufactured object and the support structures soaked with halides. The salt layer on the manufactured object is removed through rinsing in a solution; at the same time, due to the limited capacity of the solution for the penetration of support structures, the salt inside them does not undergo complete rinsing. Subsequently, the manufactured object, with the salt removed and along with the support structures still containing the salt is moved to the second etching solution. As a result of penetration of the support structures with the second component, a reaction with the support structure components takes place and they are dissolved. An example of such a solution is the use of NaF in the first solution and HNO3 in the second solution for etching of technical grade titanium.

Preferably, the manufactured object and the support structures are made from metallic materials, such as: technical grade titanium, austenitic steel, high-temperature nickel alloys, silumin AlSi12.

Preferably, the manufactured object and the support structures are made from alloys containing at least 80 atom percent titanium and the etching reagent is a solution of HF and HNO₃ in a concentration from 1% to 4% and 2% to 7%, respectively.

Preferably, the manufactured object and the support structures are made from alloys containing at least 80 atom percent nickel and iron and the etching reagent is a solution of HCl and FeCl₃ in a concentration from 4% to 20% and 1% to 4%, respectively.

Preferably, the manufactured object and the support structures are made from alloys containing at least 80 atom percent aluminum and the etching reagent is a solution of NaOH or KOH in a concentration from 10% to 50% in a temperature of 50-80°C.

Another method for additive manufacturing of three-dimensional objects from metals and their alloys in the process of melting subsequent layers of the alloying material in the form of a powder with a laser beam or an electron beam to manufacture said object itself and support structures which are subsequently removed from the object itself through chemical etching of the material, according to the invention is distinguished in that the support structures have a permeability higher than 10⁻¹² m², measured in the direction parallel to the plane defined by the layer of the deposited powder, with the thickness of the support structure wall no larger than 1 mm, and the etching takes place in at least two solutions, with the first solution causing a passive layer to develop on the material surface, and the second solution causes selective dissolution of the passive layer.

In the method according to the invention, two solutions are used. In the first solution, a passive layer is produced on the support structures; in the second, said layer is removed without the dissolution of the base material, in consequence removing a certain thickness of the material. The method uses chemical reactions on the surface of metals which have a capacity for self-limitation, i.e. on the surface of which a layer of a specific thickness is formed and grows negligibly with time. For example, under the influence of a set of acids, an oxide layer with a specific thickness is formed, with the thickness of the layer becoming stable with time. In the second solution, the oxide layer is removed without damage to the base material. The procedure may be repeated, removing a well specified thickness of the material in each cycle.

Advantageously, the processing in the solutions is carried out in alternate manner with removal of a specific layer of the material. This allows a specific thickness of the material and the support structures to be removed in a multi-step process.

Advantageously, the first solution contains metal ions with a higher electrochemical potential than the potential of the material processed in the solution. This allows for an exchange reaction to take place on the surface of the processed material and to cover it with a metal with different chemical properties, with the metal being moved to another solution, where selective etching of the deposited material takes place. Execution of multiple exchange cycles allows for an even removal of a specific layer of material and support structures.

Advantageously, the object and the support structures are rinsed between the processing in the solutions.

According to the invention, the support structures are characterized by permeability allowing for the removal of corrosion products. Alternatively, support structures according to the invention may be used along with traditional solid support structures, which are quicker to produce. In such a case, a soluble support structure is in direct contact with the model and is supported from the working plate using the traditional system. This allows for an easy removal of the support structures and a reduction in powder consumption.

To calculate the permeability of support structures, a procedure described in the literature may be used (The influence of pore size variation on the pressure drop in open-cell foams, Skibiński, 2015).

The method according to the invention allows for controlled removal of the support structures with a minimal loss of the material of the manufactured object. In relation to the present state of the art, it simultaneously determines the conditions for the manufacturing of support structures, selection of the etching solution, and a method of its excitation.

The method according to the invention is more closely described with the following examples.

### Example 1

Two materials were used in the experiments: technical grade titanium (TiCP) and silumin AlSi12. From both of these materials an object in the shape of a cube with a side length of 20 mm was produced, placed with a wall parallel to the plane determined by the deposited powder layer, on supports with a height of 10 mm. The support structure was composed of parallel plates with a width determined by a single passing of a laser beam with 50 W power at 400 mm/s speed for TiCP and 60 W and 600 mm/s for AlSi12, i.e., 90 and 120 micrometers, respectively. For the support structures, a TiCP alloy with a porosity of 11% and a AlSi12 alloy with a porosity of 9% were used. The distance between plates was set at 500 µm. The support structure permeability was calculated to be 5*10⁻⁷ m². The prepared AlSi12 alloy model along with the support structures was initially cleaned in an ultrasonic bath in distilled water, and was subsequently placed in a reaction chamber, where an etching agent in the form of 10% NaOH solution was added. The etching was carried out in a temperature of 80°C, in the minimal time required for the model to be separated, which was 8 minutes with ultrasound intensity of 0.5 W/cm² at a 20 kHz frequency. The loss of mass in the manufactured object was 0.21 g.

The finished TiCP alloy model along with the support structures was initially cleaned in an ultrasonic bath in distilled water, and was subsequently placed in a reaction chamber, where an etching agent in the form of 1.3% HF and 9% HNO₃solution was added. The etching was carried out in a temperature of 80°C, in the minimal time required for the model to be separated, which was 6 minutes with ultrasound intensity of 0.3 W/cm² at a frequency of 20 kHz. The loss of mass in the manufactured object was 0.51 g.

For the sake of comparison, the same cube models were produced from the same materials, with the difference being that the support structures were placed in the standard way, i.e., as walls crossing each other, maintaining identical distances between the walls, i.e. 500 µm. For the TiCP alloy model, the minimal etching time was 20 minutes, with a 4.2 g loss in weight of the manufactured object, and for the AlSi12 alloy object the minimal etching time was 96 minutes, with a 2.61 g loss in weight of the manufactured object. Both experiments were conducted with ultrasound intensity of 0.5 W/cm² at a frequency of 20 kHz.

### Example 2

In another example of the realization, a cube with a side of 20 mm was produced from TiCP. Support structures in the shape of poles with a diameter of 500 µm and porosity of 12% were produced with the parameters of 40 W and 500 mm/s. The distance between the supports was 200 µm and the calculated permeability was 10⁻⁹ m². What is important, the low permeability value was a consequence of the deposition of the sintered powder between the support structures. Next, the object was rinsed with distilled water for 10 min, and subsequently twice for 3 min in a solution of 1.3% HF and 9% HNO₃ with ultrasound intensity of 0.5 W/cm² at frequency of 20 kHz, which allowed for the support structures to be completely etched.

### Example 3

In another example of the realization, a cube with a side of 20 mm was produced from TiCP. Support structures in the shape of poles with a diameter of 500 µm and porosity of 0.5% were produced with the parameters of 50 W and 500 mm/s. The distance between the supports was 200 µm and the calculated permeability was 10⁻⁹ m². What is important, the low permeability value was a consequence of the deposition of the sintered powder between the support structures. Next, the object was rinsed with distilled water for 10 min, and subsequently four times for 3 min in a solution of 1.3% HF and 9% HNO₃ with ultrasound intensity of 0.5 W/cm² with a frequency of 20 kHz, which allowed for the support structures to be completely etched.

### Example 4

Another example of the realization of the invention is a component of a heat engine from AlSi12. Support structures in the shape of poles with a diameter of 500 µm and porosity of 12% were produced with the parameters of 40 W and 500 mm/s. The distance between the supports was 2000 µm and the calculated permeability was 10⁻⁵ m². Next, the object was rinsed with distilled water for 10 min, and subsequently for 3 min each in a solution of 10% KClO₄ and 3 min in a 5% HCl solution. The last two steps were repeated five times with ultrasound intensity of 0.5 W/cm² at a frequency of 20 kHz.

### Example 5

Another example of the realization of the invention is a component of a heat engine from TiCP. Support structures in the shape of poles with a diameter of 500 µm and porosity of 2% were produced with the parameters of 60 W and 500 mm/s. The distance between the supports was 1000 µm and the calculated permeability was 10⁻⁵ m². Next, the object was rinsed with distilled water for 10 min, and subsequently for 10 min in a solution of 10% NaF, then it was dried for 4 hours in a temperature of 373 K. Then, the object was rinsed for 1 min in distilled water and moved to a solution of 9% HNO₃, where it was rinsed for 6 minutes with ultrasound intensity of 0.5 W/cm² at a frequency of 20 kHz.

### Example 6

Another example of the realization of the invention is a cube with a side of 20 mm, made of 1.2709 steel. Support structures in the shape of cylinders with a diameter of 2 mm, wall thickness of 100 µm and porosity of 2% were produced with the parameters of 30 W and 125 mm/s. The distance between the supports was 1000 µm and the calculated permeability was 2 * 10⁻⁷ m². Next, the object was rinsed with distilled water for 10 min, and subsequently for 12 min in a solution of 5% CuSO₄ and 2 min in 5% NH4Cl and 5% HCl. The last two steps were repeated ten times with ultrasound intensity of 0.5 W/cm² at the 20 kHz frequency.

## Claims

1. A method for additive manufacturing of three-dimensional objects from metals and their alloys in a process of melting subsequent layers of an alloying material in the form of a powder with a laser beam or an electron beam to obtain said object being manufactured with support structures which are afterwards detached from said object by chemical etching of the material in the etching liquid,
**characterized in that** the support structures have a permeability higher than 10⁻¹² m², as measured in at least one direction parallel to a plane defined by a layer of the deposited powder, as mentioned in the description, and
thickness of the support structure wall equal or lower than 1 mm, and
the etching liquid contains at least one compound having by itself an effect of forming a passive layer on the surface of the processed material and the etching liquid is subjected to ultrasounds with an intensity larger than cavitation threshold of a medium, wherein
the support structures are soaked in a solution containing only a first of two components of the etching liquid and then moved to a container containing a second component of the etching liquid to enable mixing of the first component and the second component and therefore start etching.

2. The method according to claim 2, **characterized in that** the first solution includes an aqueous solution of metal fluorides, chlorides, or bromides, and the second solution contains an oxidizing acid.

3. The method according to claim 3, **characterized in that** the after soaking the support structures with the first solution, the solvent is evaporated.

4. The method according to claim 2, **characterized in that** after the support structures are soaked with the first component, the surplus of the first component is removed by rinsing in a cleaning solution.

5. The method according to claim 1, **characterized in that** the area of contact of the support structure with said object has a porosity larger than said object.

6. The method according to claim 1, **characterized in that** the produced support structures directly supporting said object have height of maximally 20 mm and remaining height is filled by forming support structures having greater thickness and lower porosity.

7. The method according to claim 1, **characterized in that** the manufactured object and the support structures are made from metallic materials, such as: technical grade titanium, austenitic steel, high-temperature nickel alloys, AlSi12 silumin.

8. The method according to claim 1, **characterized in that** said object and the support structures are made from alloys containing at least 80 atom percent nickel and iron, and the etching reagent is a solution of HF and HNO₃ in a concentration from 4% to 20% and 1% to 4%, respectively and preferably, said object and the support structures are made from alloys containing at least 80 atom percent aluminum and the etching reagent is a solution of NaOH and KOH in a concentration from 10% to 50% in a temperature of 50-80°C.

9. A method for additive manufacturing three-dimensional objects from metals and their alloys in the process of melting subsequent layers of the alloying material in a form of a powder with a laser beam or an electron beam to manufacture said object with support structures which are subsequently removed from said object through chemical etching of the material, **characterized in that** the support structures have a permeability higher than 10⁻¹² m², measured in the direction parallel to the plane defined by the layer of the deposited powder, as mentioned in the description, with the thickness of the support structure wall lower or equal 1 mm, and the etching takes place in at least two solutions, with the first solution causing a passive layer to develop on the material surface, and the second solution causing selective dissolution of the passive layer.

10. The method according to claim 9, **characterized in that** the material subjected to etching is an AlSi12 aluminum alloy and the first solution contains an oxidizing acid and the passive layer consists of oxides or hydroxides of the material subjected to etching and the second solution contains a non-oxidizing acid.

11. The method according to claim 10, **characterized in that** the first solution includes an alkaline solution of metal fluorides, chlorides, or bromides, and the second solution contains hydrochloric acid.

12. The method according to claim 9, **characterized in that** the first solution contains metal ions with an electrochemical potential larger in relation to the base material than the corrosion potential of the material etched in the solution, and the second solution contains.

13. The method according to the claim 12, **characterized in that** the etched material is steel 1.2709 and the first solution contains copper (II) salt ions, and the second solution contains ammonium ions.

14. The method according to the claim 9, **characterized in that** the processing is conducted alternatively in the first and the second solution.

15. The method according to the claim 9, **characterized in that** the etched components are rinsed in one or more neutralizing solutions between processing in different etching solutions.

## Patentansprüche

1. Verfahren zur additive Fertigung dreidimensionaler Objekte aus Metallen und deren Legierungen in einem Prozess des Schmelzens aufeinanderfolgender Schichten eines Legierungsmaterials in Form eines Pulvers mit einem Laserstrahl oder einem Elektronenstrahl, um das besagte Objekt mit Stützstrukturen zu erhalten, die anschließend durch chemisches Ätzen des Materials in der Ätzflüssigkeit von dem Objekt abgelöst werden, **dadurch gekennzeichnet, dass**
die Stützstrukturen eine Permeabilität von mehr als 10⁻¹² m² haben, gemessen in wenigstens einer Richtung parallel zu einer Ebene, die durch eine Schicht des abgeschiedenen Pulvers definiert ist, wie in der Beschreibung beschrieben, und
dass die Dicke der Wand der Stützstruktur gleich oder kleiner als 1 mm ist, und
dass die Ätzflüssigkeit wenigstens eine Verbindung enthält, welche selbst die Wirkung hat, eine passive Schicht auf der Oberfläche des verarbeiteten Materials zu bilden, und dass die Ätzflüssigkeit Ultraschall mit einer Intensität ausgesetzt wird, die größer ist als die Kavitationsschwelle eines Mediums, wobei
die Stützstrukturen mit einer Lösung getränkt werden, die nur eine erste von zwei Komponenten der Ätzflüssigkeit enthält, und dann in einen Behälter überführt werden, der eine zweite Komponente der Ätzflüssigkeit enthält, um ein Vermischen der ersten Komponente und der zweiten Komponente zu ermöglichen und dadurch den Ätzprozess zu starten.

2. Verfahren nach Anspruch 2, **dadurch gekennzeichnet, dass** die erste Lösung eine wässrige Lösung von Metallfluoriden, -chloriden oder -bromiden, und die zweite Lösung eine oxidierende Säure umfasst.

3. Verfahren nach Anspruch 3, **dadurch gekennzeichnet, dass** nach dem Tränken der Stützstrukturen mit der ersten Lösung, das Lösungsmittel verdampft wird.

4. Verfahren nach Anspruch 2, **dadurch gekennzeichnet, dass** nach dem Tränken der Stützstrukturen mit der ersten Lösung, der Überschuss an der ersten Komponente durch Abspülen mit einer Reinigungslösung entfernt wird.

5. Verfahren nach Anspruch 1, **dadurch gekennzeichnet, dass** die Kontaktfläche der Stützstruktur mit besagtem Objekt eine größere Porosität als das besagte Objekt hat.

6. Verfahren nach Anspruch 1, **dadurch gekennzeichnet, dass** die hergestellten Stützstrukturen, die das Objekt direkt stützen, eine Höhe von maximal 20 mm aufweisen und die verbleibende Höhe durch Ausbilden von Stützstrukturen mit größerer Dicke und geringerer Porosität ausgefüllt wird.

7. Verfahren nach Anspruch 1, **dadurch gekennzeichnet, dass** das hergestellte Objekt und die Stützstrukturen aus metallischen Materialien bestehen, wie insbesondere technischem Titan, austenitischem Stahl, Hochtemperatur-Nickellegierungen, Silumin AlSi12.

8. Verfahren nach Anspruch 1, **dadurch gekennzeichnet, dass** besagte Objekte und die Stützstrukturen aus Legierungen bestehen, die wenigstens 80 Atomprozent Nickel und Eisen umfassen, und das Ätzreagenz eine Lösung von HF und HNO₃ mit einer Konzentration von 4% bis 20% bzw. 1% bis 4% ist, und vorzugsweise besagtes Objekt und die Stützstrukturen aus Legierungen bestehen, die wenigstens 80 Atomprozent Aluminium umfassen und das Ätzreagenz eine Lösung von NaOH und KOH mit einer Konzentration von 10% bis 50% bei einer Temperatur von 50-80°C ist.

9. Verfahren zur additiven Fertigung dreidimensionaler Objekte aus Metallen und deren Legierungen in einem Prozess des Schmelzens aufeinanderfolgender Schichten eines Legierungsmaterials in Form eines Pulvers mit einem Laserstrahl oder einem Elektronenstrahl, um das besagte Objekt mit Stützstrukturen herzustellen, die anschließend durch chemisches Ätzen des Materials von dem Objekt entfernt werden, **dadurch gekennzeichnet, dass** die Stützstrukturen eine Permeabilität von mehr als 10⁻¹² m² haben, gemessen in der Richtung parallel zu der Ebene, die durch die Schicht des abgeschiedenen Pulvers definiert ist, wie in der Beschreibung beschrieben, wobei die Dicke der Wand der Stützstruktur kleiner oder gleich 1 mm ist, und das Ätzen in mindestens zwei Lösungen stattfindet, wobei die erste Lösung die Entwicklung einer Passivschicht auf der Materialoberfläche bewirkt und die zweite Lösung die selektive Auflösung der Passivschicht bewirkt.

10. Verfahren nach Anspruch 9, **dadurch gekennzeichnet, dass** das dem Ätzprozess ausgesetzte Material eine AlSi12-Aluminiumlegierung ist und die erste Lösung eine oxidierende Säure umfasst und die Passivierungsschicht aus Oxiden oder Hydroxiden des dem Ätzprozess ausgesetzten Materials besteht und die zweite Lösung eine nicht-oxidierende Säure umfasst.

11. Verfahren nach Anspruch 10, **dadurch gekennzeichnet, dass** die erste Lösung eine alkalische Lösung vom Metallfluoriden, -chloriden, oder -bromiden, und die zweite Lösung Salzsäure umfasst.

12. Verfahren nach Anspruch 9, **dadurch gekennzeichnet, dass** die erste Lösung Metallionen mit einem elektrochemischen Potenzial umfasst, das im Verhältnis zum Grundmaterial größer ist als das Korrosionspotenzial des in der Lösung geätzten Materials, und die zweite Lösung umfasst.

13. Verfahren nach Anspruch 12, **dadurch gekennzeichnet, dass** das geätzte Material Stahl 1.2709 ist und die erste Lösung Kupfer (II)-Salzionen und die zweite Lösung Ammoniumionen umfasst.

14. Verfahren nach Anspruch 9, **dadurch gekennzeichnet, dass** die Verarbeitung alternativ in der ersten und in der zweiten Lösung erfolgt.

15. Verfahren nach Anspruch 9, **dadurch gekennzeichnet, dass** die geätzten Komponenten zwischen der Verarbeitung in verschiedenen Ätzlösungen mit einer oder mehreren Neutralisierungslösungen abgespült werden.

## Revendications

1. Procédé pour la fabrication additive d'objets tridimensionnels à partir de métaux et de leurs alliages selon un processus de fusion de couches subséquentes d'un matériau d'alliage sous la forme d'une poudre à l'aide d'un faisceau laser ou d'un faisceau d'électrons pour obtenir ledit objet qui est fabriqué à l'aide de structures de support qui sont ensuite séparées dudit objet par gravure chimique du matériau dans le liquide de gravure,
**caractérisé en ce que**:
les structures de support présentent une perméabilité supérieure à 10 12 m2, telle que mesurée dans au moins une direction parallèle à un plan qui est défini par une couche de la poudre déposée, comme mentionné dans la description, et une épaisseur de la paroi des structures de support est inférieure ou égale à 1 mm ; et
le liquide de gravure contient au moins un composé qui a par lui-même un effet de formation d'une couche passive sur la surface du matériau traité, et le liquide de gravure est soumis à des ultrasons selon une intensité qui est supérieure au seuil de cavitation d'un milieu ;
dans lequel:
les structures de support sont immergées dans une solution qui contient seulement un premier composant de deux composants du liquide de gravure puis sont déplacées jusqu'à un contenant qui contient un second composant du liquide de gravure afin de permettre le mélange du premier composant et du second composant et afin de, par voie de conséquence, commencer la gravure.

2. Procédé selon la revendication 2, **caractérisé en ce que** la première solution inclut une solution aqueuse de fluorures de métal/métaux, de chlorures de métal/métaux ou de bromures de métal/métaux, et la seconde solution contient un acide oxydant.

3. Procédé selon la revendication 3, **caractérisé en ce qu'**après l'immersion des structures de support à l'aide de la première solution, le solvant est évaporé.

4. Procédé selon la revendication 2, **caractérisé en ce qu'**après l'immersion des structures de support à l'aide du premier composant, le surplus du premier composant est enlevé par rinçage dans une solution de nettoyage.

5. Procédé selon la revendication 1, **caractérisé en ce que** la zone de contact de la structure de support avec ledit objet présente une porosité plus importante que celle dudit objet.

6. Procédé selon la revendication 1, **caractérisé en ce que** les structures de support produites qui supportent directement ledit objet présentent une hauteur d'au maximum 20 mm et la hauteur restante est remplie en formant des structures de support qui présentent une épaisseur plus importante et une porosité plus faible.

7. Procédé selon la revendication 1, **caractérisé en ce que** l'objet fabriqué et les structures de support sont réalisés à partir de matériaux métalliques tels que : du titane de classe technique, de l'acier austénitique, des alliages de nickel haute température, du silumin AlSi12.

8. Procédé selon la revendication 1, **caractérisé en ce que** ledit objet et les structures de support sont réalisés à partir d'alliages qui contiennent au moins 80 % en pourcentage atomique de nickel et de fer, et le réactif de gravure est une solution de HF et de HNO3 selon respectivement des concentrations de 4 % à 20 % et de 1 % à 4 % et de préférence, ledit objet et les structures de support sont réalisés à partir d'alliages qui contiennent au moins 80 % en pourcentage atomique d'aluminium et le réactif de gravure est une solution de NaOH et de KOH selon une concentration de 10 % à 50 % à une température de 50 à 80 °C.

9. Procédé pour la fabrication additive d'objets tridimensionnels à partir de métaux et de leurs alliages selon le processus de fusion de couches subséquentes du matériau d'alliage sous la forme d'une poudre à l'aide d'un faisceau laser ou d'un faisceau d'électrons pour fabriquer ledit objet à l'aide de structures de support qui sont ensuite enlevées dudit objet par l'intermédiaire d'une gravure chimique du matériau ;
**caractérisé en ce que**:
les structures de support présentent une perméabilité supérieure à 10 12 m2, telle que mesurée dans la direction parallèle au plan qui est défini par la couche de la poudre déposée, comme mentionné dans la description, l'épaisseur de la paroi des structures de support étant inférieure ou égale à 1 mm ; et
la gravure est effectuée dans au moins deux solutions, la première solution provoquant le développement d'une couche passive sur la surface du matériau et la deuxième solution provoquant une dissolution sélective de la couche passive.

10. Procédé selon la revendication 9, **caractérisé en ce que** le matériau qui est soumis à gravure est un alliage d'aluminium AlSi12 et la première solution contient un acide oxydant et la couche passive est constituée par des oxydes ou des hydroxydes du matériau qui est soumis à gravure et la deuxième solution contient un acide non oxydant.

11. Procédé selon la revendication 10, **caractérisé en ce que** la première solution inclut une solution alcaline de fluorures de métal/métaux, de chlorures de métal/métaux ou de bromures de métal/métaux, et la deuxième solution contient de l'acide chlorhydrique.

12. Procédé selon la revendication 9, **caractérisé en ce que** la première solution contient des ions de métal qui présentent un potentiel électrochimique plus important en relation avec le matériau de base que le potentiel de corrosion du matériau qui est gravé dans la solution, et la deuxième solution contient.

13. Procédé selon la revendication 12, **caractérisé en ce que** le matériau gravé est de l'acier 1.2709 et la première solution contient des ions de sel de cuivre (II), et la deuxième solution contient des ions d'ammonium.

14. Procédé selon la revendication 9, **caractérisé en ce que** le traitement est mis en œuvre en alternance dans la première solution et dans la deuxième solution.

15. Procédé selon la revendication 9, **caractérisé en ce que** les composants gravés sont rincés dans une ou plusieurs solutions de neutralisation entre
